# EUROPEAN PATENT SPECIFICATION

(11) **EP 3 238 998 B1**
(45) Date of publication and mention of the grant of the patent: **07.08.2019**
(21) Application number: 15872869.1
(22) Date of filing: 16.12.2015
(51) Int. Cl.: B60R 1/072, B60R 1/06, B60R 1/02

(54) **VIEW CONTROL DEVICE FOR VEHICLE**
SICHTSTEUERUNGSVORRICHTUNG FÜR EIN FAHRZEUG
DISPOSITIF DE COMMANDE DE VISUALISATION POUR VÉHICULE

(30) Priority: 22.12.2014 JP 2014259151
(43) Date of publication of application: 01.11.2017
(73) Proprietor: Kabushiki Kaisha Tokai Rika Denki Seisakusho, Ohguchi-cho Niwa-gun Aichi 480-0195 (JP)
(72) Inventor: MIYAZAKI, Shinichi, Niwa-gun Aichi 480-0195 (JP); NAGAO, Takashi, Niwa-gun Aichi 480-0195 (JP); KOBAYASHI, Fumikazu, Niwa-gun Aichi 480-0195 (JP); KONDO, Juntaro, Niwa-gun Aichi 480-0195 (JP)
(74) Representative: TBK
(86) International application number: PCT/JP2015/085283
(87) International publication number: WO 2016/104300

(56) References cited:
- DE-A1-102011 120 517
- JP-A- 2006 527 689
- JP-A- 2008 044 397
- US-B1- 8 775 031

## Description

### Technical Field

The present invention relates to a viewing control device for a vehicle that controls a viewing device for viewing the periphery of a vehicle, such as a door mirror or a camera or the like.

### Background Art

Japanese Utility Model Application Laid-Open (JP-U) No. H6-23 829 proposes a rearview mirror device for a vehicle that has a mirror driving mechanism that obtains a turn direction signal from a direction indicator or a steering wheel, and moves a rearview mirror in respective directions.

Further, Japanese Patent Application Laid-Open (JP-A) No. 2010-208374 proposes an angle control device of a door mirror for a vehicle that has acceleration sensing means for sensing that a vehicle is accelerating at greater than or equal to a given acceleration from a given speed and within a given time period, steering angle range sensing means for sensing that the steering angle of the steering of the vehicle is within a given range within a given time period, and blinker operation sensing means for sensing that the right turn blinker of the vehicle has operated within a given time period, and in which, in a case in which it is sensed by these sensing means that the vehicle is accelerating at greater than or equal to a given acceleration from a given speed and within a given time period, and that the steering angle of the steering of the vehicle is within a given range within a given time period, and that the right turn blinker of the vehicle has operated within a given time period, effects control so as to open up, toward the outer side, the angle of the right side door mirror of the vehicle from a predetermined angle for a given time period and by a given angle.

The generic DE 10 2011 120517 A1 describes a mirror that has two mirror elements adjustable relative to each other around different vertical adjustment axes by an adjustable unit. The adjustable unit comprises a support unit for adjustably supporting the mirror element around a degree of freedom, where the mirror elements are horizontally and/or vertically arranged adjacent to each other. One of the mirror elements is adjusted depending on adaptation information that is provided a sensor device, where the adaptation information is obtained from self-recorded and/or preset driving conditions. The sensor device is selected from a group consisting of sensor units for detecting map data i.e. navigation apparatus-based map data, inclination angle, steering wheel angle, traveling directions, gear switching positions, load distributions and tire pressure.

### SUMMARY OF INVENTION

### Technical Problem

However, although JP-U No. H6-23829 and JP-A No. 2010-208374 describe changing the viewing range interlockingly with turning, there are cases in which the viewing range shifts away from the appropriate viewing range due to the way of turning.

For example, at the time of making a left turn, in a case in which the left turn is made after tending sideways toward the left or the left turn is made after steering first toward the right side, there are cases in which an amount of turning that is different from the actual amount of turning is calculated, and therefore, there are cases in which the viewing range deviates from an appropriate viewing range depending on the traveling state before the left turn.

The present invention was made in view of the above-described circumstances, and an object thereof is to make it possible to, at the time of changing a viewing range interlockingly with turning, change the viewing range to an appropriate viewing range.

### Solution to Problem

In order to achieve the above-described object, the present invention includes: a changing portion that, interlockingly with turning of a vehicle, changes a viewing range of a periphery of the vehicle with respect to a vehicle occupant; and an estimating section that estimates an offset angle between a vehicle traveling direction and a road direction from a vehicle traveling state before establishment of a condition for starting changing of the viewing range by the changing portion and a correcting section that, on the basis of the offset angle that is estimated by the estimating section, corrects an amount of change of the viewing range by the changing portion that changes the viewing range interlockingly with turning, wherein the estimating section estimates the offset angle between the vehicle traveling direction and a traffic lane that serves as the road direction.

In accordance with the present invention, at the changing portion, the viewing range of the periphery of the vehicle with respect to the vehicle occupant is changed interlockingly with turning of the vehicle. For example, in a case in which the periphery of the vehicle is viewed by a mirror surface or a camera, the changing portion changes the viewing range by driving an actuator such as a motor or the like so as to change the position of the mirror surface or the direction of imaging. Or, the changing portion changes the viewing range by changing the position that is cut-out from a captured image.

Further, at the estimating section, the offset angle between the vehicle traveling direction and the traffic lane is estimated from the vehicle traveling state before establishment of a condition for starting changing of the viewing range by the changing portion. Due to the offset angle being estimated by the estimating section in this way, by using the estimated offset angle, the amount of change of the viewing range by the changing portion that changes the viewing range interlockingly with the turning can be corrected. Accordingly, at the time of changing the viewing range interlockingly with turning, the viewing range can be changed to an appropriate viewing range regardless of the way of turning.

Further at the correcting section that, on the basis of the offset angle that is estimated by the estimating section, corrects the amount of change of the viewing range by the changing portion that changes the viewing range interlockingly with the turning, the viewing range can be changed to an appropriate viewing range at the time of changing the viewing range interlockingly with turning. Note that the estimating section may estimate, as the offset angle, the amount of turning of the vehicle that is determined from the vehicle speed and the steering angle of a predetermined time period before establishment of the condition. Further, the estimating section estimates the offset angle between the vehicle traveling direction and the traffic lane that serves as the road direction.

### Advantageous Effects of Invention

As described above, in accordance with the present invention, there is the effect that, at the time of changing a viewing range interlockingly with turning, the viewing range can be changed to an appropriate viewing range.

### BRIEF DESCRIPTION OF DRAWINGS

Fig. 1 is an exterior view of a door mirror device for a vehicle that is the object of control of a door mirror control device relating to an embodiment of the present invention.
Fig. 2 is a cross-sectional view (a cross-sectional view along line 2-2 of Fig. 1) in which main portions of the door mirror device for a vehicle are seen from a vehicle vertical direction upper side (a vehicle upper side).
Fig. 3 is a block drawing showing the structure of the control system of the door mirror control device for a vehicle relating to the present embodiment.
Fig. 4 is a drawing for explaining turning-interlocked mirror control.
Fig. 5 is a drawing showing a situation in which the region of a viewing range is changed in accordance with an amount of turning.
Fig. 6A is a drawing showing a situation in which the viewing range is changed interlockingly with turning.
Fig. 6B is a drawing showing a situation in which the viewing range cannot be changed to an appropriate viewing range in a case of turning while tending sideways.
Fig. 6C is a drawing showing a situation in which the viewing range cannot be changed to an appropriate viewing range in a case of turning after steering the nose of the vehicle in the direction opposite the direction of turning.
Fig. 7A is a drawing for explaining correction of turning-interlocked mirror control in a case of turning while tending sideways.
Fig. 7B is a drawing for explaining correction of turning-interlocked mirror control in a case of turning after steering the nose of the vehicle in the direction opposite the direction of turning.
Fig. 8 is a flowchart that shows an example of the flow of processings that are carried out at an ECU of the door mirror control device for a vehicle relating to the present embodiment.
Fig. 9 is a flowchart that shows an example of the flow of mirror interlocking processings that are carried out at the ECU of the door mirror control device for a vehicle relating to the present embodiment.
Fig. 10 is a block diagram showing the structure of the control system of a door mirror control device for a vehicle relating to a modified example of the present embodiment.
Fig. 11 is a flowchart that shows an example of the flow of processings that are carried out at the ECU of the door mirror control device for a vehicle relating to the modified example of the present embodiment.
Fig. 12 is a flowchart that shows an example of the flow of mirror interlocking processings that are carried out at the ECU of the door mirror control device for a vehicle relating to the modified example of the present embodiment.

### DESCRIPTION OF EMBODIMENTS

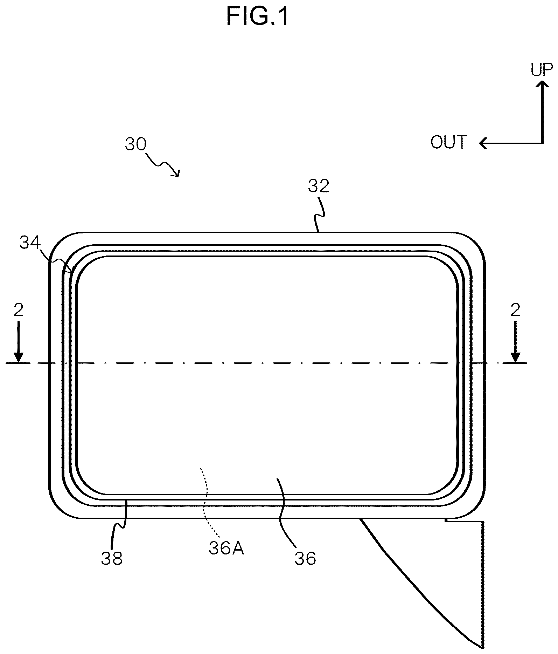

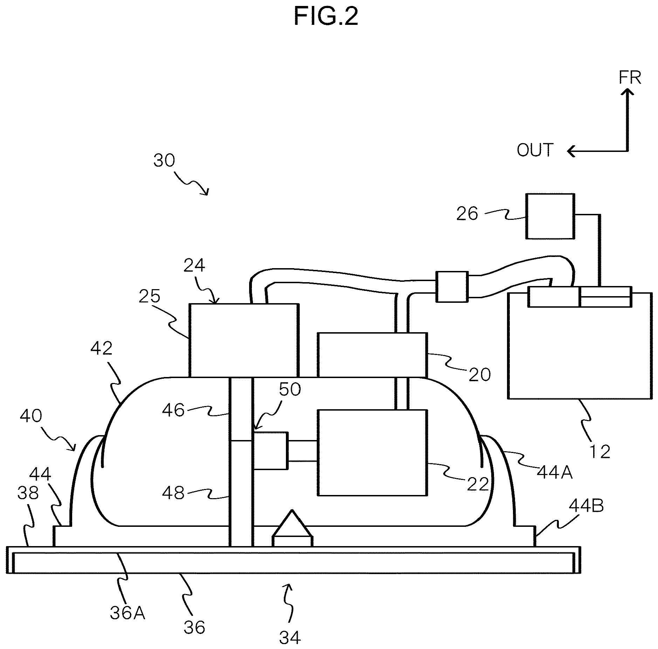

An example of an embodiment of the present invention is described in detail hereinafter with reference to the drawings. Note that, hereinafter, a door mirror control device for a vehicle is described as an example of the viewing control device for a vehicle of the present invention. Fig. 1 is an exterior view of a door mirror device for a vehicle that is the object of control of the door mirror control device relating to the embodiment of the present invention. Further, Fig. 2 is a cross-sectional view (a cross-sectional view along line 2-2 of Fig. 1) in which main portions of the door mirror device for a vehicle are seen from the vehicle vertical direction upper side (the vehicle upper side). Note that, in the drawings, the vehicle front side is indicated by arrow FR, a vehicle transverse direction outer side (the vehicle left side) is indicated by arrow OUT, and the upper side is indicated by arrow UP.

A door mirror device 30 for a vehicle is installed at the outer side of the front end of a vertical direction intermediate portion of a door (a front door) of the vehicle.

As shown in Fig. 1, the door mirror device 30 for a vehicle has a visor 32 that is substantially shaped as a rectangular parallelepiped container and serves as an outer peripheral member. The door mirror device 30 for a vehicle is installed at the door due to the vehicle transverse direction inner side portion of the visor 32 being supported at the door (the vehicle body side). Further, the interior of the visor 32 opens toward the vehicle rear side.

A mirror 34 that is substantially shaped as a rectangular flat plate is provided within the visor 32. The mirror 34 is disposed in the opening portion of the visor 32. A mirror main body 36 (mirror body) is provided at the vehicle rear side portion of the mirror 34. The vehicle rear side surface that is a reflecting film of the mirror main body 36 is made to be a mirror surface 36A. Further, the vehicle front side and the outer periphery of the mirror main body 36 are covered by a mirror holder 38 (a mirror holder outer).

As shown in Fig. 2, a mirror surface adjusting unit 40 that is electrically operated is provided within the visor 32.

A case 42 that is substantially shaped as a hemispherical container is provided at the vehicle front side portion of the mirror surface adjusting unit 40. The interior of the case 42 opens toward the vehicle rear side. The case 42 is supported by the visor 32, and, due thereto, the mirror surface adjusting unit 40 is supported by the visor 32.

A tilting body 44 (mirror holder inner) is provided at the vehicle rear side portion of the mirror surface adjusting unit 40. The tilting body 44 is held by the case 42 so as to be able to tilt (swing, pivot). A sliding tube 44A that is substantially shaped as a cylindrical tube is provided at the tilting body 44. The diameter of the sliding tube 44A becomes gradually smaller toward the vehicle front side, and the sliding tube 44A is made to be able to slide with respect to the peripheral wall of the case 42. A mounting plate 44B that is substantially disc shaped is provided integrally with the vehicle rear side end of the sliding tube 44A. The mirror holder 38 of the mirror 34 is detachably mounted to the vehicle rear side of the mounting plate 44B. Due thereto, the mirror 34 can be tilted integrally with the tilting body 44 and with respect to the case 42, with the center of gravity position of the mirror 34 (the surface central position of the mirror surface 36A) being the center.

An up/down motor (not illustrated) and an in/out motor 22 that serves as a changing portion are fixed to the interior of the case 42. An up/down rod (not illustrated) and an in/out rod 48 that are respectively rod-shaped are connected to the up/down motor and the in/out motor 22 via gear mechanisms 50 that serve as mechanical mechanisms. The up/down rod and the in/out rod 48 are held within the case 42 so as to be able to slide (move) in the vehicle longitudinal direction (the axial direction). The distal end (the vehicle rear side end) of the up/down rod is rotatably held at the mounting plate 44B at the upper side (or may be at the lower side) of the center of gravity position of the mirror 34. The distal end (the vehicle rear side end) of the in/out rod 48 is rotatably held at the mounting plate 44B at the vehicle transverse direction outer side (or may be at the vehicle transverse direction inner side) of the center of gravity position of the mirror 34.

The up/down motor and the in/out motor 22 are electrically connected via mirror surface driving drivers 20 to an ECU 12 (a mirror ECU) that serves as a control section. The ECU 12 is provided within the visor 32 or at the vehicle body side. An adjustment operation device 26 is electrically connected to the ECU 12. When the adjustment operation device 26 is operated by a vehicle occupant (the driver in particular) of the vehicle, due to control of the ECU 12, the mirror surface adjusting unit 40 is operated, and the up/down motor and the in/out motor 22 are driven. Due thereto, the up/down rod and the in/out rod 48 are slid in the vehicle longitudinal direction, and the tilting body 44 and the mirror 34 are tilted with respect to the case 42. Due thereto, the tilted position of the mirror 34 is adjusted, and the angle of the mirror surface 36A of the mirror 34 (the direction in which the mirror surface 36A faces) is adjusted.

When the up/down rod is slid toward the vehicle front side, the tilting body 44 and the mirror 34 are tilted upward (in an upwardly-facing direction), and the mirror surface 36A of the mirror 34 is tilted in an upwardly-facing direction. When the up/down rod is slid toward the vehicle rear side, the tilting body 44 and the mirror 34 are tilted downward (in a downwardly-facing direction), and the mirror surface 36A of the mirror 34 is tilted in a downwardly-facing direction. When the in/out rod 48 is slid toward the vehicle front side, the tilting body 44 and the mirror 34 are tilted outward (in an outwardly-facing direction), and the mirror surface 36A of the mirror 34 is tilted in a direction of facing outwardly in the vehicle transverse direction. When the in/out rod 48 is slid toward the vehicle rear side, the tilting body 44 and the mirror 34 are tilted inward (in an inwardly-facing direction), and the mirror surface 36A of the mirror 34 is tilted in a direction of facing inwardly in the vehicle transverse direction.

As shown in Fig. 2, an up/down sensor (not illustrated) and an in/out sensor 24 are provided at the case 42. The up/down sensor and the in/out sensor 24 respectively are electrically connected to the ECU 12. A housing 25 that is substantially shaped as a rectangular parallelepiped box is provided at the up/down sensor and the in/out sensor 24, respectively. The up/down sensor and the in/out sensor 24 are fixed to the case 42 due to housings 25 being fixed to the outer side of the bottom wall of the case 42.

Detecting rods 46 that are rod-shaped are provided at the housings 25 so as to be slidable in the vehicle longitudinal direction (the axial direction). The detecting rods 46 project-out toward the vehicle rear side from the housings 25 and are urged toward the vehicle rear side. The detecting rods 46 pass-through the bottom wall of the case 42, and are inserted into the interior of the case 42. The detecting rods 46 of the up/down sensor and the in/out sensor 24 are disposed coaxially with and at the vehicle front sides of the up/down rod and the in/out rod 48, respectively. The distal ends (the vehicle rear side ends) of the detecting rods 46 of the up/down sensor and the in/out sensor 24 are, by urging forces, made to contact the proximal ends (the vehicle front side ends) of the up/down rod and the in/out rod 48 respectively. The detecting rods 46 of the up/down sensor and the in/out sensor 24 can always slide in the vehicle longitudinal direction integrally with the up/down rod and the in/out rod 48, respectively. Therefore, due to the up/down sensor and the in/out sensor 24 detecting the slid positions in the vehicle longitudinal direction of the detecting rods 46 respectively, the up/down sensor and the in/out sensor 24 detect the slid positions in the vehicle longitudinal direction of the up/down rod and the in/out rod 48 respectively, and detect the tilted position of the mirror 34 in the up/down direction and the in/out direction.

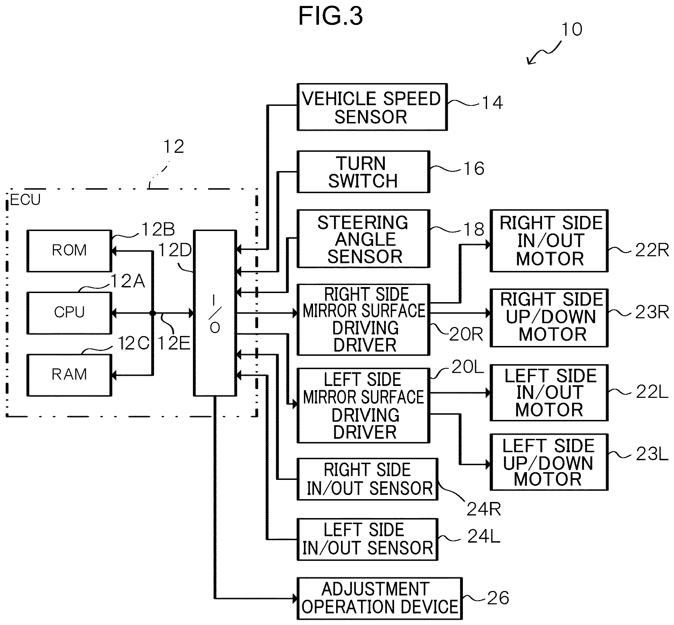

Fig. 3 is a block drawing showing the structure of the control system of the door mirror control device 10 for a vehicle relating to the present embodiment.

As described above, the door mirror control device 10 for a vehicle has the ECU 12. The ECU 12 is structured by a microcomputer in which a CPU 12A, a ROM 12B, a RAM 12C and an I/O (input/output interface) 12D are respectively connected to a bus 12E.

A turning-interlocked mirror control program that is described later, various types of data such as various types of tables, formulas and the like, and the like are stored in the ROM 12B. Due to the program that is stored in the ROM 12B being expanded in the RAM 12C and being executed by the CPU 12A, control that moves the mirror surface 36A of the mirror 34 interlockingly with turning is carried out. Note that, as an example, the turning-interlocked mirror control program is stored as the program that is stored in the ROM 12B, but other programs also are stored.

A vehicle speed sensor 14, a turn switch 16, a steering angle sensor 18, a right side mirror surface driving driver 20R, a left side mirror surface driving driver 20L, a right side in/out sensor 24R, a left side in/out sensor 24L, and the above-described adjustment operation device 26 are connected to the I/O 12D.

The vehicle speed sensor 14 detects the traveling speed of the vehicle (hereinafter called the vehicle speed), and the results of detection are inputted to the ECU 12.

The turn switch 16 is a switch for instructing lighting of the turn signals, and instructions for lighting the left and right turn signals are inputted to the ECU 12. Due thereto, on the basis of the signals of the turn switch 16, the ECU 12 judges the intent of the vehicle occupant to turn.

The steering angle sensor 18 detects the steering angle (hereinafter called steering angle) of the steering, and inputs the results of detection of the steering angle to the ECU 12.

A right side up/down motor 23R and a right side in/out motor 22R are connected to the right side mirror surface driving driver 20R. The right side up/down motor 23R and the right side in/out motor 22R are driven in accordance with instructions of the ECU 12. Further, a left side up/down motor 23L and a left side in/out motor 22L are connected to the left side mirror surface driving driver 20L. The left side up/down motor 23L and the left side in/out motor 22L are driven in accordance with instructions of the ECU 12.

The right side in/out sensor 24R detects the tilted position of the right side mirror 34 in the in/out direction, and the left side in/out sensor 24L detects the tilted position of the left side mirror 34 in the in/out direction, and they respectively input the results of detection to the ECU 12. Note that, although not illustrated, up/down sensors as well are provided in correspondence with the respective left and right mirrors 34, and are connected to the ECU 12.

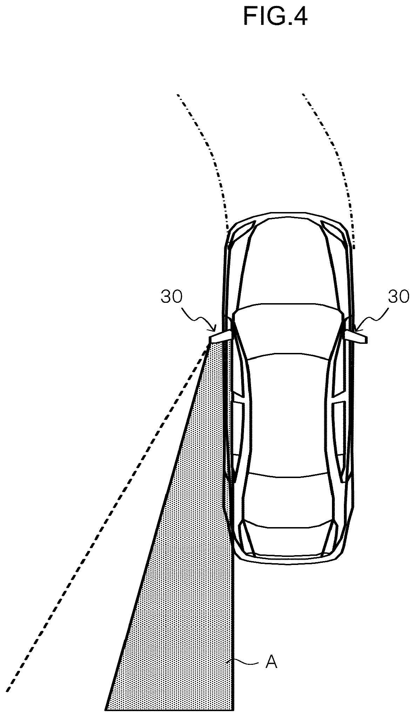

Here, the turning-interlocked mirror control is carried out at the door mirror control device 10 for a vehicle relating to the present embodiment is described. Fig. 4 is a drawing for explaining the turning-interlocked mirror control.

The turning-interlocked mirror control is carried out due to the ECU 12 executing the turning-interlocked mirror control program that is stored in the ROM 12B.

In a case of carrying out turning such as a right turn or a left turn or the like, the vehicle occupant confirms the door mirror device 30 for a vehicle, and confirms turn collision objects such as bicycles and the like. However, when the turn is started, in accordance with the turning, the viewing range of the periphery of the vehicle, with respect to the vehicle occupant, of the door mirror device 30 for a vehicle moves outside of the region where objects of confirmation as turn collision objects, such as bicycles or the like, exist.

Because objects of confirmation come out of the viewing range at the time of turning of the vehicle in this way, in the turning-interlocked mirror control, control is carried out to tilt the mirror surface 36A of the mirror 34 and change the viewing range, interlockingly with the turning of the vehicle.

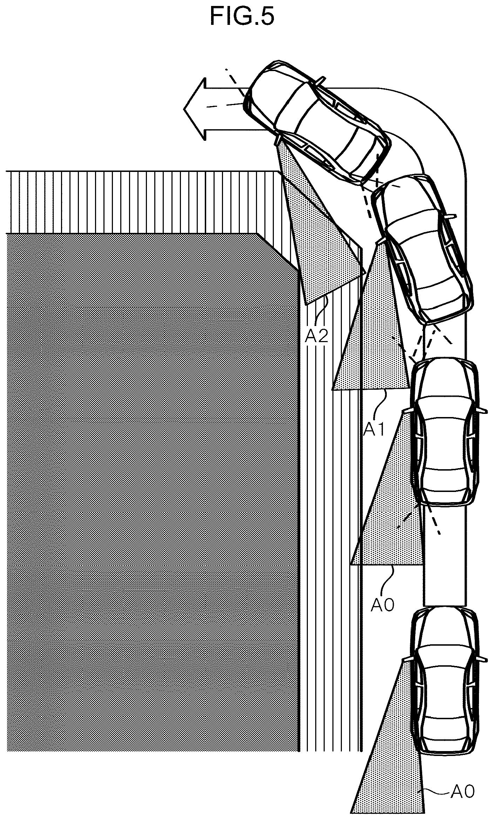

Concretely, in a usual state such as a state of advancing straight forward or the like, the vehicle occupant is at a position of viewing region A of the viewing range that is shown in Fig. 4 and is set in advance. Here, at the time of a turn, the amount of turning is detected from the results of detection of the vehicle speed sensor 14 and the steering angle senor 18. Then, the ECU 12 controls the driving of the in/out motor 22 so as to tilt the mirror surface 36A and move the region A of the viewing range in the direction of the dashed line in Fig. 4, in accordance with the detected amount of turning. Due thereto, as shown in Fig. 5, in accordance with the amount of turning, the viewing range is changed from region A0 to regions A1, A2, and confirmation of turn collision objects at the time of turning can be carried out reliably. Note that, in the present embodiment, the condition for starting the turning-interlocked mirror control is, as an example, starting in a case in which the turn switch 16 is on and the steering angle is greater than or equal to a preset threshold value (e.g., 4° or the like). Further, tilting of the mirror surface 36A that corresponds to the amount of turning is controlled by storing, in the ECU 12 and in advance, amounts of movement of the mirror surface 36A that correspond to amounts of turning, and reading-out an amount of movement that corresponds to the amount of turning.

Note that, in the present embodiment, description is given, as an example, of a case in which the turn switch 16 being on and a steering angle that is greater than or equal to a predetermined steering angle being detected are the condition for starting the turning-interlocked mirror control. However, the change condition is not limited to this. For example, the results of detection of another sensor, such as an acceleration sensor or the like, may be used as the start condition.

By the way, in the turning-interlocked mirror control, the viewing range is changed in accordance with the amount of turning. However, there are cases in which the viewing range cannot be changed to an appropriate viewing range, depending on the traveling state before turning (e.g., offset between the vehicle traveling direction and the traffic lane). Note that, in the present embodiment, "traffic lane" is an example typifying the direction of the road, but is not limited to lines that are set on a road.

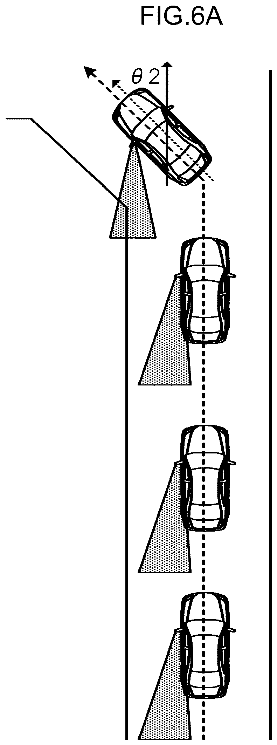

For example, as shown in Fig. 6A, in a case in which the offset angle of the vehicle with respect to the traffic lane before turning is 0[deg], by changing the viewing range in accordance with an amount of turning θ2[deg] at the time of turning, the viewing range can be changed to a viewing range that is appropriate for carrying out confirmation of turn collision objects.

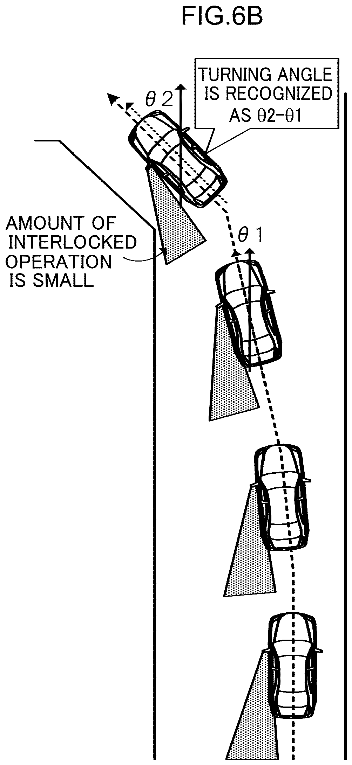

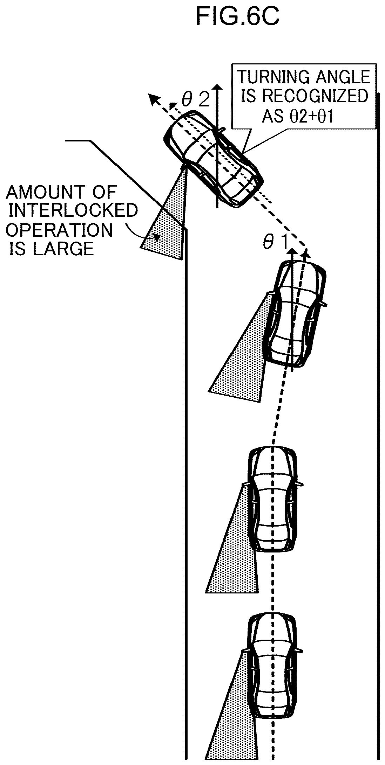

On the other hand, as shown in Fig. 6B, in a case in which turning is carried out while tending sideways (a case in which the offset angle of the vehicle with respect to the traffic lane before turning is θ1[deg] in the turning direction), the ECU 12 recognizes the amount of turning as (θ2-θ1[deg]), and the amount of interlocked operation is small. Further, as shown in Fig. 6C, in a case of turning after steering the nose of the vehicle in the direction opposite the direction of turning (a case in which the offset angle of the vehicle with respect to the traffic lane before turning is θ1[deg] in the direction opposite the direction of turning), the ECU 12 recognizes the amount of turning as (θ2+θ1)[deg], and the amount of interlocked operation is conversely large.

Thus, in the present embodiment, the ECU 12 is provided with a function of estimating the offset angle between the vehicle traveling direction and the traffic lane, from the state of traveling before the turning-interlocked mirror control is executed. Then, by using the estimated offset angle, the ECU 12 corrects the amount of change by which the viewing range is changed at the time of the turning-interlocked mirror control.

Concretely, in a case in which a start condition for the turning-interlocked mirror control is established, by computing the amount of turning of a predetermined time period (e.g., a period of several seconds) before the start condition is established, this amount of turning is computed as the offset angle between the vehicle traveling direction and the traffic lane. Then, by using the computed offset angle, the amount of movement by which the mirror surface is to be moved at the time of the turning-interlocked mirror control is corrected. Due thereto, the viewing range can be changed to an appropriate viewing range at the time of carrying out the turning-interlocked mirror control.

For example, 3[s] before establishment of the start condition of the turning-interlocked mirror control is set as t0, 1[s] before is set as t1, and the turning-interlocking start time is set as t2[s]. Note that t0 through t2 may be values that are corrected in accordance with the vehicle speed.

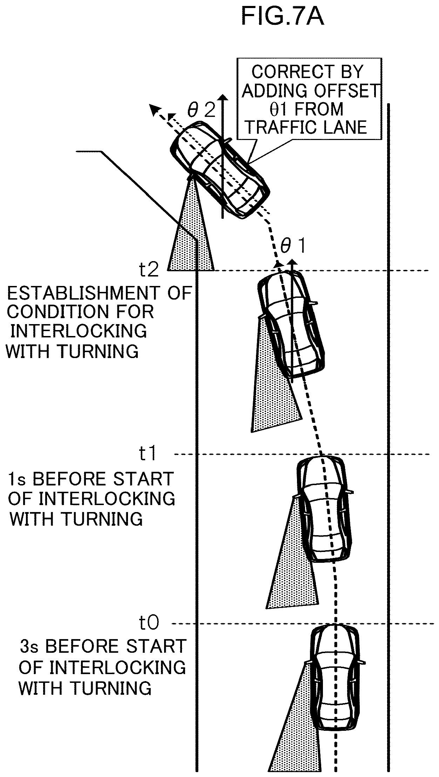

Here, in a case of turning after tending sideways, as shown in Fig. 7A, if the steering wheel is not operated during the time from time t0 to t1 (e.g., in a case in which the steering angle is within the range of -1 to 1 [deg]), the average value of the heading of the vehicle during this time is set to an amount of turning of 0[deg]. Further, amount of turning θ1[deg] during the time from time t1 to t2 is computed. Due thereto, the offset between the traffic lane and the heading of the vehicle can be determined. Further, at the time of carrying out the turning-interlocked mirror control, by adding the offset angle θ1 between the vehicle traveling direction and the traffic lane from the amount of turning (θ2-θ1) of the vehicle, the amount of turning is corrected, and the viewing range can be changed to a viewing range that is appropriate for the traffic lane. Note that, in a case in which the steering wheel is operated during the time from time t0 to t1 (e.g., in a case in which the steering angle falls outside of the range of -1 to 1[deg]), control is carried out with the amount of turning θ1 = 0[deg] (no correction).

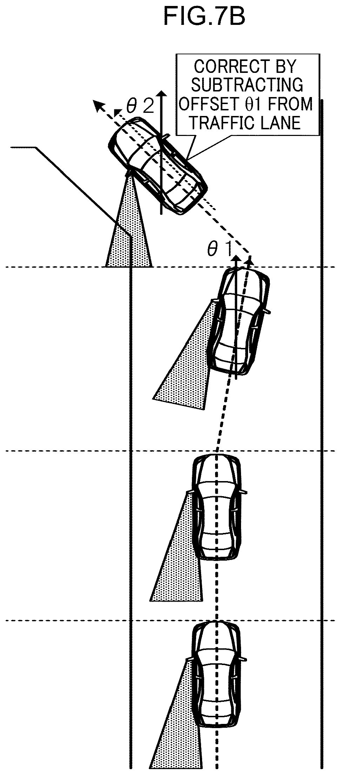

Similarly, in a case of turning after steering the nose of the vehicle toward the side opposite the direction of turning, as shown in Fig. 7B, at the time of carrying out the turning-interlocked mirror control, by subtracting the offset angle θ1 between the vehicle traveling direction and the traffic lane from the amount of turning (θ2-θ1) of the vehicle, the viewing range can be changed to a viewing range that is appropriate for the traffic lane.

Note that the present embodiment describes an example in which the offset angle is computed with the traffic lane set as the road direction, by setting an amount of turning of 0[deg] from the amount of turning of a predetermined time period before establishment of the condition for starting the turning-interlocked mirror control. However, the present invention is not limited to this. For example, because the road direction is known from navigation information of a navigation device, navigation information may be acquired, the offset angle between the vehicle advancing direction and the road direction may be computed from the amount of turning and the navigation information before establishment of the condition for starting the turning-interlocked mirror control.

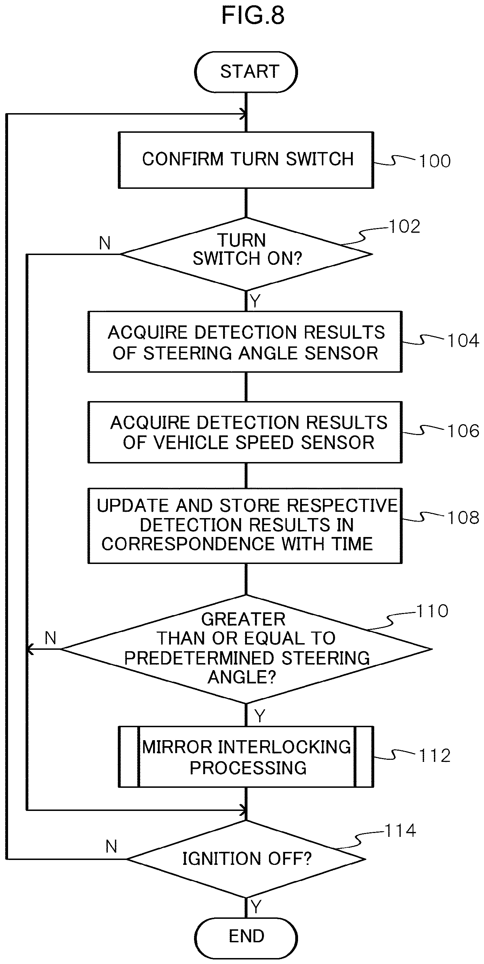

Next, concrete processings that are carried out by the ECU 12 of the door mirror control device 10 for a vehicle, which relates to the present embodiment and is structured as described above, are described. Fig. 8 is a flowchart showing an example of the flow of processings that are carried out by the ECU 12 of the door mirror control device 10 for a vehicle relating to the present embodiment. Note that explanation is given of an example in which the processings of Fig. 8 are started in a case in which an unillustrated ignition switch is turned on.

First, in step 100, the ECU 12 confirms the operating state of the turn switch 16, and the routine moves on to step 102.

In step 102, the ECU 12 judges whether or not the turn switch 16 has been turned on. If this judgment is affirmative, the routine moves on to step 104, and if this judgment is negative, the routine moves on to step 114.

In step 104, the ECU 12 acquires the results of detection of the steering angle sensor 18, and the routine moves on to step 106.

In step 106, the ECU 12 acquires the results of detection of the vehicle speed sensor 14, and the routine moves on to step 108.

In step 108, the ECU 12 updates and stores the respective acquired results of detection of the steering angle sensor 18 and the vehicle speed sensor 14 in correspondence with time, and the routine moves on to step 110. Namely, the traveling state before establishment of the condition for starting the turning-interlocked mirror control is successively stored and updated in correspondence with time.

In step 110, the ECU 12 judges whether or not the steering angle detected by the steering angle sensor 18 is greater than or equal to a predetermined steering angle. If this judgment is affirmative, the routine moves on to step 112, and, if this judgment is negative, the routine moves on to step 114.

In step 112, the ECU 12 carries out mirror interlocking processing, and the routine moves on to step 114. Although details thereof are described later, in this mirror interlocking processing, for example, the ECU 12 determines the amount of turning from the respective results of detection of the steering angle sensor 18 and the vehicle speed sensor 14, and controls driving of the in/out motor 22 so as to move the mirror surface 36A to a preset position in accordance with the amount of turning. Concretely, in this control, control is carried out such that, the greater the amount of turning, the more the mirror surface 36A is directed toward the outer side, and the better the region at the outer side can be viewed.

Further, in step 114, the ECU 12 judges whether or not the ignition switch has been turned off. If this judgment is negative, the routine returns to step 100 and the above-described processings are carried out. If this judgment is affirmative, the series of processings is ended.

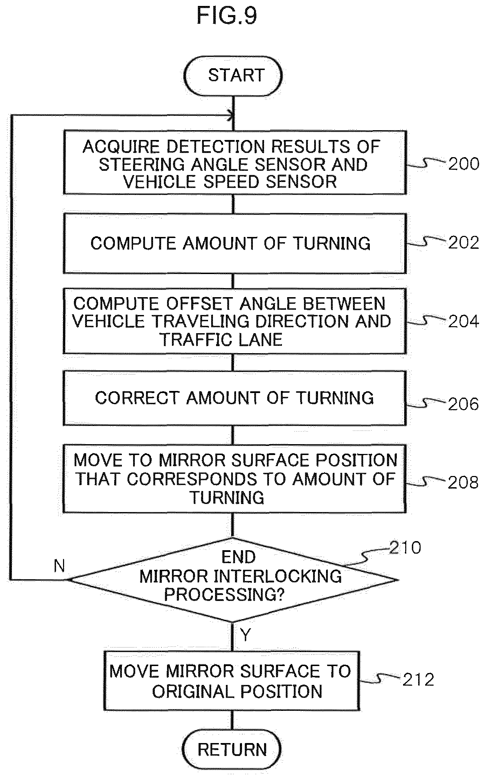

The detailed flow of the mirror interlocking processing that is carried out in aforementioned step 112 is described next. Fig. 9 is a flowchart that shows an example of the flow of mirror interlocking processings that are carried out at the ECU of the door mirror control device 10 for a vehicle relating to the present embodiment.

When there is a transition to the mirror interlocking processing, in step 200, the ECU 12 acquires the results of detection of the steering angle sensor 18 and the vehicle speed sensor 14, and the routine moves on to step 202.

In step 202, the ECU 12 computes the amount of turning from the detected vehicle speed and steering angle, and the routine moves on to step 204.

In step 204, the ECU 12 computes the offset angle from the traffic lane, and the routine moves on to step 206. Concretely, as described above, during the time period from time t0 to t1, if the steering angle is within the range of -1 to 1[deg], the ECU 12 recognizes that the average value of the amount of turning of the vehicle is 0[deg]. Further, by using the vehicle speed and the steering angle that were stored in step 108, the ECU 12 computes the amount of turning θ1[deg] during the time from time t1 to t2 as the offset angle. On the other hand, in a case in which the steering angle falls outside of the range of -1 to 1[deg], the offset angle from the traffic lane is made to be 0[deg].

In step 206, the ECU 12 corrects the amount of turning that was computed in step 202, and the routine moves on to step 208. Concretely, the amount of turning (02±01) that was acquired from time t2 and thereafter is corrected by an amount corresponding to the offset angle that was computed in step 204. Namely, by correcting the amount of turning, the amount of movement of the mirror surface 36A toward a position that corresponds to the amount of turning is corrected in the following steps.

In step 208, the ECU 12 controls driving of the in/out motor 22 so as to move the mirror surface 36A to a preset position in accordance with the amount of turning, and the routine moves on to step 210.

In step 210, the ECU 12 judges whether or not the mirror interlocking processing is to be ended. This judgment may be a judgment as to whether or not the steering angle has started to become smaller, or may be a judgment as to whether or not there has become a steering angle that is such that it is judged that there is a state of advancing straight forward, or may be a judgment as to whether another condition has been established. In a case in which this judgment is negative, the routine returns to step 200 and the above-described processings are repeated. In a case in which this judgment is affirmative, the routine moves on to step 212.

In step 212, the turning-interlocked mirror control is stopped, and the ECU 12 controls the driving of the in/out motor 22 so as to move the mirror surface 36A to its original position before the changing of the viewing range, and returns the series of mirror interlocking processings, and the routine moves on to above-described step 114.

By carrying out processings in this way, in the present embodiment, at the time of carrying out the turning-interlocked mirror control, the offset angle between the vehicle traveling direction and the traffic lane is estimated, and therefore, the amount of change in the viewing range, that corresponds to the amount of turning, can be corrected by using the estimated offset angle. Accordingly, at the time of changing the viewing range interlockingly with turning, it is possible to make the viewing range changeable to an appropriate viewing range.

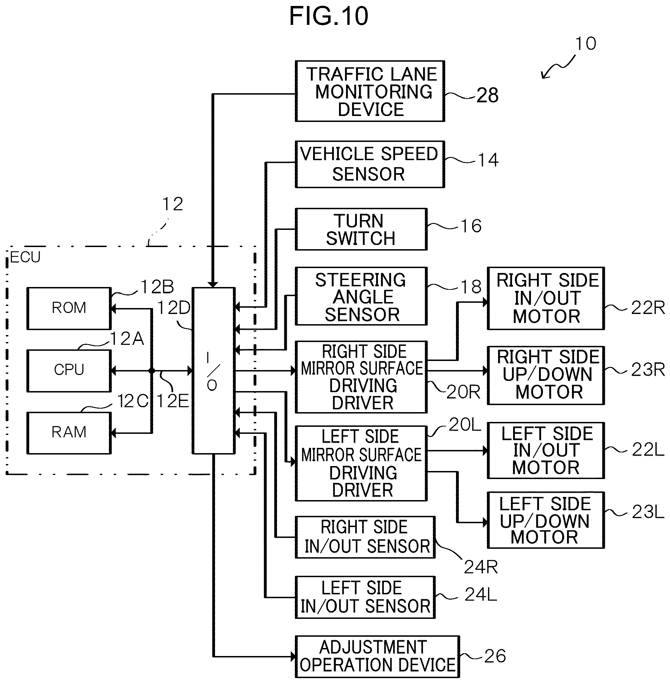

A door mirror control device for a vehicle relating to a modified example is described next. Fig. 10 is a block diagram showing the structure of the control system of a door mirror control device 11 for a vehicle relating to the modified example of the present embodiment. Note that portions that are the same as those of the above-described embodiment are denoted by the same reference numerals, and description thereof is omitted.

The above describes an example in which the offset angle between the vehicle traveling direction and the traffic lane is estimated from the state of traveling before execution of the turning-interlocked mirror control. However, in the modified example, information relating to the offset angle between the vehicle traveling direction and the traffic lane is acquired from a traffic lane monitoring device 28 that monitors the traffic lane.

Namely, as shown in Fig. 10, as compared with the above-described embodiment, the traffic lane monitoring device 28 is further connected to the I/O 12D, and information relating to the traffic lane that is monitored by the traffic lane monitoring device 28 (the offset angle between the vehicle traveling direction and the traffic lane) is inputted to the ECU 12.

The traffic lane monitoring device 28 is structured to include, for example, an imaging device such as a camera or the like, and extracts the traffic lane from captured images of the imaging device by pattern matching or the like. Then, the offset angle of the vehicle with respect to the traffic lane is detected. In the present embodiment, the ECU 12 acquires information that expresses the offset angle of the vehicle with respect to the traffic lane that is detected by the traffic lane monitoring device 28 before the turning-interlocked mirror control is carried out, and this information is utilized in correction at the time of carrying out the turning-interlocked mirror control.

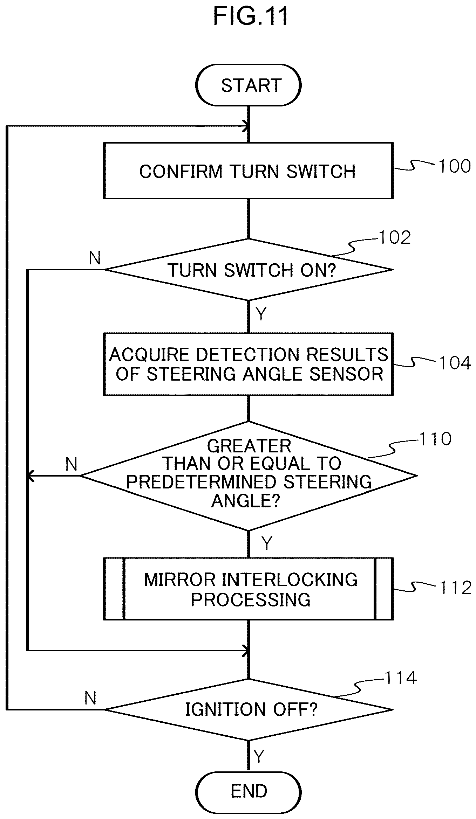

In the concrete processings that are carried out by the ECU 12 of the door mirror control device 11 for a vehicle that relates to the modified example of the present embodiment and is structured in this way, as shown in Fig. 11, processings are carried out with steps 106, 108 being omitted as compared with the above-described embodiment. Fig. 11 is a flowchart showing an example of the flow of processings that are carried out by the ECU 12 of the door mirror control device 10 for a vehicle relating to the modified example of the present embodiment. Note that, because these are processings in which steps 106, 108 are omitted as compared with the above-described embodiment, detailed description is omitted.

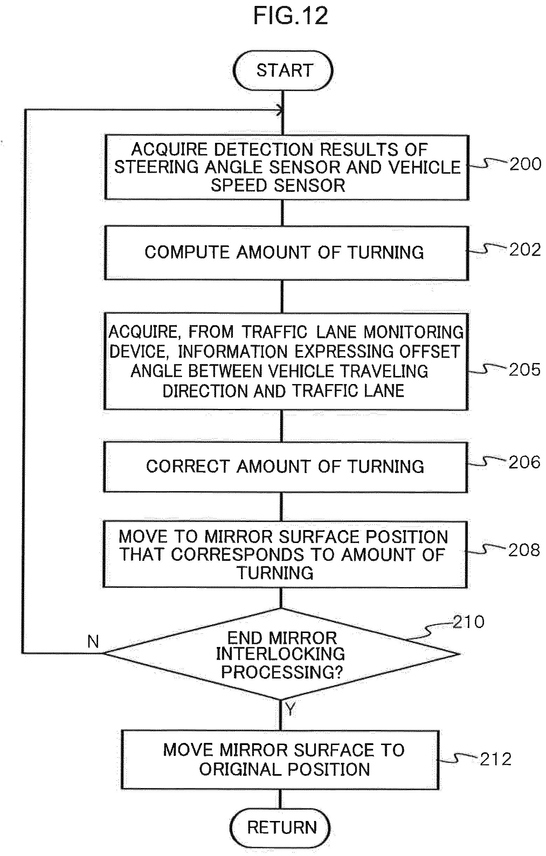

On the other hand, in the mirror interlocking processing of step 112, as compared with the above-described embodiment, step 205 is carried out instead of step 204, as shown in Fig. 12.

Namely, in step 205, information, which expresses the offset angle between the vehicle traveling direction and the traffic lane, is acquired from the traffic lane monitoring device 28, and the routine moves on to step 206. Information, which expresses the offset angle that is detected before the turning-interlocked mirror control is carried out, is acquired as the information that expresses the offset angle between the vehicle traveling direction and the traffic lane and that is acquired from the traffic lane monitoring device 28. Namely, information, which expresses the offset angle that is detected during the time period corresponding to time t1 through t2 in the above-described embodiment, is acquired. Due thereto, in step 206, the amount of turning that was computed in step 202 can be corrected by using the offset angle between the vehicle traveling direction and the traffic lane that is acquired from the traffic lane monitoring device 28.

In this way, even if it is made such that the offset angle between vehicle traveling direction and the traffic lane is acquired from the traffic lane monitoring device 28 or the like, changing of the viewing range that corresponds to the amount of turning can be corrected, and the viewing range can be changed to a viewing range that is appropriate for the traffic lane.

Note that the above-described embodiment describes the door mirror control device 10 for a vehicle as an example of the viewing control device for a vehicle, but the present invention is not limited to this. For example, the present invention may be applied to a structure that controls a rearview mirror or the like instead of the door mirror device 30 for a vehicle. Or, instead of the door mirror device 30 for a vehicle, the present invention may be applied to an imaging device such as a camera or the like, and may be applied to driving the imaging direction of the imaging device interlockingly with turning. Further, as the method of changing the viewing range in the case of application to an imaging device such as a camera or the like, there may be employed a structure in which the changing of the imaging direction is not changing by moving the camera, but that changes the display range for the vehicle occupant by cutting-out from the captured image.

Further, the above-described embodiment describes, as an example, a case in which, as the condition for starting the turning-interlocked mirror control, the turn switch 16 is turned on and a steering angle of greater than or equal to a predetermined steering angle is detected. However, navigation information of a navigation device, or the like, may be included in the condition for starting.

## Claims

1. A viewing control device (30) for a vehicle, comprising:
a changing portion (22) that, interlockingly with turning of a vehicle, changes a viewing range of a periphery of the vehicle with respect to a vehicle occupant;
an estimating section (12) that estimates an offset angle (θ1) between a vehicle traveling direction and a road direction from a vehicle traveling state before establishment of a condition for starting changing of the viewing range by the changing portion (22); and
a correcting section (12) that, on the basis of the offset angle (θ1) that is estimated by the estimating section (12), corrects an amount of change (θ2±θ1) of the viewing range by the changing portion (22) that changes the viewing range interlockingly with turning,
**characterized in that** the estimating section (12) estimates the offset angle (θ1) between the vehicle traveling direction and a traffic lane, on which the vehicle travels, that serves as the road direction.

2. The viewing control device (30) for a vehicle according to claim 1, wherein the estimating section (12) estimates, as the offset angle (θ1), an amount of turning of the vehicle that is determined from a vehicle speed and a steering angle of a predetermined time period before establishment of the condition.

3. The viewing control device (30) for a vehicle according to claim 1,
wherein the changing portion (22) changes the viewing range such that the greater the amount of turning, the more the viewing range is directed toward an outer side of the vehicle, and
wherein the correcting section (12) corrects the amount of turning by the offset angle (θ1) and corrects the amount of change (θ2±θ1) of the viewing range so as to be the viewing range corresponding to the corrected amount of turning.

## Patentansprüche

1. Sichtsteuervorrichtung (30) für ein Fahrzeug mit:
einem Änderungsabschnitt (22), der ineinandergreifend mit dem Lenken eines Fahrzeugs einen Sichtbereich einer Peripherie des Fahrzeugs mit Bezug zu einem Fahrzeuginsassen ändert;
einem Schätzungsabschnitt (12), der einen Offsetwinkel (θ1) zwischen einer Fahrzeugfahrrichtung und einer Straßenrichtung von einem Fahrzeugfahrzustand vor der Etablierung einer Bedingung zum Starten der Änderung des Sichtbereichs durch den Änderungsabschnitt (22) schätzt; und
einem Korrekturabschnitt (12), der auf Basis des Offsetwinkels (θ1), der durch den Schätzungsabschnitt (12) geschätzt wird, eine Änderungsmenge (θ2±θ1) des Sichtbereichs durch den Änderungsabschnitt (22) korrigiert, der den Sichtbereich ineinandergreifend mit dem Lenken ändert,
**dadurch gekennzeichnet, dass**
der Schätzungsabschnitt (12) den Offsetwinkel (θ1) zwischen der Fahrzeugfahrrichtung und einer Fahrspur auf der das Fahrzeug fährt, schätzt, die als die Straßenrichtung dient.

2. Sichtsteuervorrichtung (30) für ein Fahrzeug nach Anspruch 1, wobei der Schätzungsabschnitt (12) als den Offsetwinkel (θ1) einen Lenkgrad des Fahrzeugs schätzt, der von einer Fahrzeuggeschwindigkeit und einem Lenkwinkel einer vorbestimmten Zeitperiode vor der Etablierung der Bedingung bestimmt wird.

3. Sichtsteuervorrichtung (30) für ein Fahrzeug nach Anspruch 1,
wobei der Änderungsabschnitt (22) den Sichtbereich so ändert, dass bei größerem Lenkgrad der Sichtbereich mehr zu einer Außenseite des Fahrzeugs gerichtet wird, und
wobei der Korrekturabschnitt (12) den Lenkgrad durch den Offsetwinkel (θ1) korrigiert und die Änderungsmenge (θ2±θ1) des Sichtbereichs korrigiert, um den Sichtbereich entsprechend dem korrigierten Lenkgrad zu entsprechen.

## Revendications

1. Dispositif de commande de vision (30) pour un véhicule, comprenant :
une portion de changement (22) qui, en lien avec le virage d'un véhicule, change une plage de vision d'une périphérie du véhicule par rapport à un occupant du véhicule ;
une section d'estimation (12) qui estime un angle de déport (θ1) entre une direction de déplacement de véhicule et une direction de route à partir d'un état de déplacement de véhicule avant établissement d'une condition pour débuter un changement de la plage de vision par la portion de changement (22) ; et
une section de correction (12) qui, sur la base de l'angle de déport (θ1) qui est estimé par la section d'estimation (12), corrige une quantité de changement (θ2 + θ1) de la plage de vision par la portion de changement (22) qui change la plage de vision en lien avec le virage,
**caractérisé en ce que** la section d'estimation (12) estime l'angle de déport (θ1) entre la direction de déplacement de véhicule et une voie de circulation, sur laquelle se déplace le véhicule, qui sert de direction de route.

2. Dispositif de commande de vision (30) pour un véhicule selon la revendication 1, dans lequel la section d'estimation (12) estime, en tant qu'angle de déport (θ1), une quantité de virage du véhicule qui est déterminée à partir d'une vitesse du véhicule et d'un angle de braquage d'une période de temps prédéterminée avant établissement de la condition.

3. Dispositif de commande de vision (30) pour un véhicule selon la revendication 1, dans lequel la portion de changement (22) change la plage de vision de sorte que plus la quantité de virage est grande, plus la plage de vision est dirigée vers un côté extérieur du véhicule, et
dans lequel la section de correction (12) corrige la quantité de virage de l'angle de déport (θ1) et corrige la quantité de changement (θ2 ± θ1) de la plage de vision de façon qu'elle soit la plage de vision correspondant à la quantité de virage corrigée.
